# EUROPEAN PATENT APPLICATION

(11) **EP 4 596 279 A1**
(43) Date of publication of application: **06.08.2025**
(21) Application number: 23884884.0
(22) Date of filing: 31.10.2023
(51) Int. Cl.: B60J 10/82

(54) **GLASS EDGING ASSEMBLY AND MANUFACTURING METHOD THEREFOR, AND VEHICLE**

(30) Priority: 02.11.2022 CN 202211360341
(71) Applicant: Fuyao Glass Industry Group Co., Ltd., Fuqing, Fujian 350300 (CN)
(72) Inventor: CHEN, Hui, Fuqing, Fujian 350300 (CN); OU, Xinbing, Fujian 350300 (CN); LIN, Zhiqing, Fujian 350300 (CN); LUO, Hengjie, Fujian 350300 (CN); LIN, Junfeng, Fujian 350300 (CN); WU, Guangzhou, Fujian 350300 (CN)
(74) Representative: Inchingalo, Simona
(86) International application number: PCT/CN2023/128019
(87) International publication number: WO 2024/093954

(57) **Abstract**

The present application relates to a glass edging assembly and a manufacturing method therefor, and a vehicle. The glass edging assembly (10) comprises glass (11), an edging (12), and a sealing strip (13). The edging (12) is arranged at the edge of the glass (11). The sealing strip (13) comprises a first sealing portion (131) and a second sealing portion (132), the hardness of the first sealing portion (131) being greater than that of the second sealing portion (132), and the first sealing portion (131) being connected between the second sealing portion (132) and the edging (12). For the first sealing portion (131) and the edging (12), one of the two is partially embedded in the other of the two.

## Description

### CROSS-REFERENCE TO RELATED APPLICATIONS

The present application claims priority to Chinese patent application No. 2022113603410, entitled "Glass Edging Assembly and Manufacturing Method Therefor, and Vehicle", filed on November 2, 2022, the disclosure of which is hereby incorporated by reference in its entirety.

### TECHNICAL FIELD

The present application relates to the technical field of automotive glass, in particular to a glass edging assembly, a manufacturing method therefor and a vehicle.

### BACKGROUND

When a vehicle roof glass is mounted on a vehicle roof, sealing between the glass and the roof is required to achieve waterproof effect. For example, the sealing may be achieved by an abutment between a glass edge wrapping and the roof, or by providing a sealing strip between the glass and the roof. The edge wrapping structure of the glass is generally made of materials such as PU/PVC, which has significant limitations in circumstances having sealing requirements. Although the sealing strip has good sealing effect in the early stage, a problem of water leakage caused by deformation would emerge after long-term use.

### SUMMARY

According to various embodiments of the present application, a glass edging assembly, a manufacturing method therefor, and a vehicle are provided in this application.

The glass edging assembly includes:
a glass;
an edge wrapping disposed on an edge of the glass; and
a sealing strip including a first sealing portion and a second sealing portion, wherein a hardness of the first sealing portion is greater than a hardness of the second sealing portion, the first sealing portion is connected between the second sealing portion and the edge wrapping, and a part of one of the first sealing portion and the edge wrapping is embedded in another of the first sealing portion and the edge wrapping.

In an embodiment, a part of the edge wrapping is embedded in the first sealing portion, and a first T-shaped groove is formed in the first sealing portion to provide a space for accommodating an embedded portion of the edge wrapping.

In an embodiment, an opening width L11 of the first T-shaped groove is 2 mm to 5 mm, a thickness L12 of a portion of the first sealing portion, where the first T-shaped groove is formed, in a width direction of an opening of the first T-shaped groove is 4 mm to 10 mm, an opening depth L13 of the first T-shaped groove is 2 mm to 3 mm, and a groove bottom depth L14 of the first T-shaped groove is 2 mm to 3 mm.

In an embodiment, a difference between the opening width L11 and the groove bottom width L10 of the first T-shaped groove is 2 mm to 5 mm.

In an embodiment, a depth L15 of the first sealing portion is 6 mm to 12 mm in a direction in which the second sealing portion is spaced from the glass.

In an embodiment, a part of the first sealing portion is embedded in the edge wrapping, and a second T-shaped groove is formed in the edge wrapping to provide a space for accommodating an embedded portion of the first sealing portion.

In an embodiment, an opening width L21 of the second T-shaped groove is 4 mm to 12 mm, the opening width L21 of the second T-shaped groove is smaller than a groove bottom width L22 of the second T-shaped groove by 1 mm to 6 mm, an opening depth L23 of the second T-shaped groove is 1 mm to 4 mm, and a groove bottom depth L24 of the second T-shaped groove is 1 mm to 3 mm.

In an embodiment, a minimum distance L5 between the second sealing portion and the edge wrapping is 3 mm to 10 mm.

In an embodiment, a surface of the first sealing portion that is not in direct contact with the edge wrapping and is not in direct contact with the second sealing portion is provided with a positioning groove.

In an embodiment, a groove opening width L6 of the positioning groove is 1 mm to 5 mm, and a depth L7 of the positioning groove is 2 mm to 4 mm.

In an embodiment, the sealing strip is a co-extrusion sealing strip; and/or
the first sealing portion and the edge wrapping integrally connected by injection molding.

In an embodiment, a surface of the first sealing portion that is in direct contact with the second sealing portion is a second main surface, and an included angle formed between the second main surface and the glass is 98° to 130°.

In an embodiment, the first sealing portion is made of a PP material, an ABS material, a TPE material or a PVC material; and/or
the second sealing portion is made of TPE material, EPDM material or PVC material; and/or
the edge wrapping is made of PU material, PP material, PVC material, TPE material or ABS material.

The vehicle includes the glass edging assembly described above.

In the manufacturing method of a glass edging assembly, the glass edging assembly includes a sealing strip, a hardness of the first sealing portion is greater than a hardness of the second sealing portion, the second sealing portion has a cavity formed therein, the cavity extends along a length direction of the sealing strip, and the manufacturing method includes the following steps:
S1, putting a glass and the sealing strip into a general mold, positioning the first sealing portion and pressing the second sealing portion in a direction close to the first sealing portion by the general mold, so that the second sealing portion is pressed and deformed and the cavity is compressed, and the glass, the first sealing portion and the general mold together enclose an injection molding cavity;
S2, injecting an edge wrapping material into the injection molding cavity; and
S3, removing the general mold after the edge wrapping material is shaped, so that the second sealing portion is elastically reset to restore the cavity to an initial state thereof.

In an embodiment, the first sealing portion has a first main surface extending along a length direction and in direct contact with the general mold, and the general mold is at least partially in an interference fit with the first main surface.

In an embodiment, an amount of interference at the interference fit is 0.05 mm to 0.3 mm.

In an embodiment, a triangular protrusion is provided on a portion of the general mold opposite to the first main surface, and after the sealing strip is assembled into the general mold, the triangular protrusion is in an interference fit with the first main surface.

In an embodiment, the greater an injection pressure that a cavity wall of the injection molding cavity needs to withstand when the edge wrapping material is injected into the injection molding cavity, the greater a degree to which the second sealing portion is pressed by the general mold in an early stage.

In an embodiment, cavity walls of a part of the cavity are attached to and tightly press each other after the second sealing portion is pressed and deformed in the step S1; and
the step S2 includes the following step: injecting PP material, PVC material, TPE material or ABS material into the injection molding cavity, wherein the injection pressure in the injection molding cavity is more than 5 MPa, or
the step S2 includes the following step: injecting PU material, PP material, PVC material, TPE material or ABS material into the injection molding cavity, wherein a minimum distance between the second sealing portion and the injection molding cavity is less than 5 mm.

The details of one or more embodiments of the present application are provided in the accompanying drawings and the description hereinafter, so that other features, objectives, and advantages of the present application are more comprehensible.

### BRIEF DESCRIPTION OF THE DRAWINGS

The accompanying drawings that constitute part of the present application are intended to provide a further understanding of the present application. The illustrative embodiments of the present application as well as the description thereof are provided to explain the present application, and do not constitute improper limitations to the present application.

In order to more clearly illustrate the technical solutions in the embodiments of the present application, a brief description is given below for the drawings referred in the description of the embodiments. Obviously, the drawings in the following description are merely some embodiments of the application. For those of ordinary skill in the art, other drawings can also be obtained based on these drawings without involving any inventive effort.
FIG. 1 is a schematic structural view of a glass edging assembly according to an embodiment;
FIG. 2 is a cross-sectional view of the glass edging assembly according to an embodiment;
FIG. 3 is a cross-sectional view of a sealing strip in FIG. 2;
FIG. 4 is a cross-sectional view illustrating the glass edging assembly shown in FIG. 2 in a manufacturing process using a manufacturing method;
FIG. 5 is a cross-sectional view illustrating the glass edging assembly shown in FIG. 2 in a manufacturing process using another manufacturing method;
FIG. 6 is a cross-sectional view of a glass edging assembly according to another embodiment;
FIG. 7 is a cross-sectional view illustrating the glass edging assembly shown in FIG. 6 in a manufacturing process using a manufacturing method;
FIG. 8 is a cross-sectional view illustrating the glass edging assembly shown in FIG. 6 in a manufacturing process using another manufacturing method;
FIG. 9 is a cross-sectional view of a glass edging assembly according to still another embodiment; and
FIG. 10 is a cross-sectional view illustrating the glass edging assembly shown in FIG. 9 in a manufacturing process.

### Reference Numerals:

10, glass edging assembly; 11, glass; 12, edge wrapping; 13, sealing strip; 131, first sealing portion; 1311, first T-shaped groove; 1312, positioning groove; 1313, first main surface; 1314, second main plane; 132, second sealing portion; 1321, cavity; 20, general mold; 21, upper mold; 22, lower mold; 23, triangular protrusion.

### DETAILED DESCRIPTION

In order to make the objectives, features, and advantages of the present application more apparent and understandable, the specific implementations of the present application will be explained in detail below in conjunction with the accompanying drawings. In the following description, numerous specific details are set forth in order to facilitate a thorough understanding of the present application. However, the present application can be implemented in many other ways different from those described herein, and those skilled in the art can make similar modifications without departing from the spirit of the application, so that the present application is not limited to the specific embodiments disclosed below.

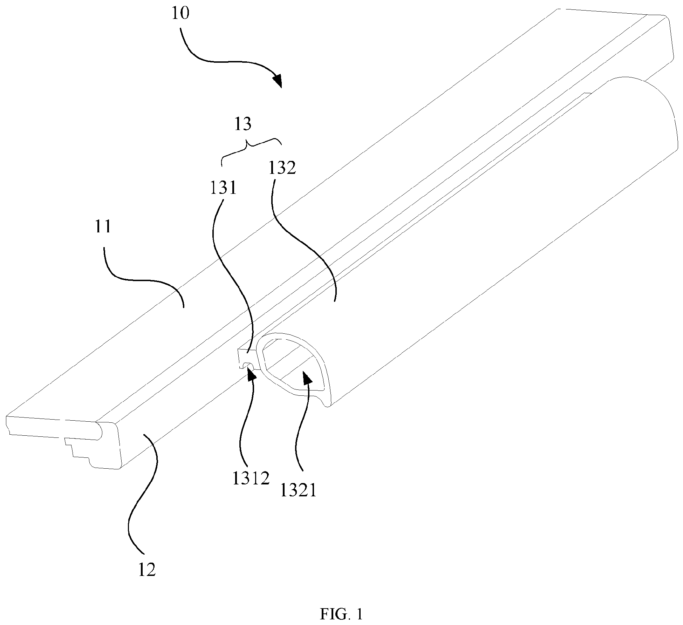

As shown in FIG. 1, in some embodiments, a glass edging assembly 10 is provided, which includes a glass 11, an edge wrapping 12, and a sealing strip 13. The edge wrapping 12 is disposed at the edge of the glass 11. The sealing strip 13 includes a first sealing portion 131 and a second sealing portion 132. A hardness of the first sealing portion 131 is greater than that of the second sealing portion 132. The first sealing portion 131 is connected between the second sealing portion 132 and the edge wrapping 12. A part of one of the first sealing portion 131 and the edge wrapping 12 is embedded in the other.

The sealing strip 13 may be a co-extrusion sealing strip manufactured by using a co-extrusion equipment, or may be manufactured by other processes, which is not specifically limited herein.

When it is described in this application that an object is embedded in another object, it means that a part of the object is inserted in the other object. Specifically, one object can be embedded in another object after being shaped by an integral injection molding manner. Further, in order to improve the reliability of the connection between the two objects embedded in each other, in some embodiments, a part of one of the first sealing portion 131 and the edge wrapping 12 that is embedded in the other of the first sealing portion 131 and the edge wrapping 12 is an embedded portion, and the cross-sectional area of the embedded portion tends to decrease in a direction away from the one in which the embedded portion is embedded.

According to the glass edging assembly 10 provided above, the first sealing portion 131 with relatively high hardness is connected to the edge wrapping 12, so that the connection between the sealing strip 13 and the edge wrapping 12 is more reliable. In addition, the first sealing portion 131 and the edge wrapping 12 are partially embedded, so that a pulling force that can be withstood between the sealing strip 13 and the edge wrapping 12 is relatively large. The second sealing portion 132 with relatively low hardness can be configured to abut against the vehicle roof or other parts of the vehicle body, which can be applied to a wider range of application. The combination of the edge wrapping 12 and the sealing strip 13 expands the range of application, ensures the sealing effect, and reduces the water leakage after long-term use.

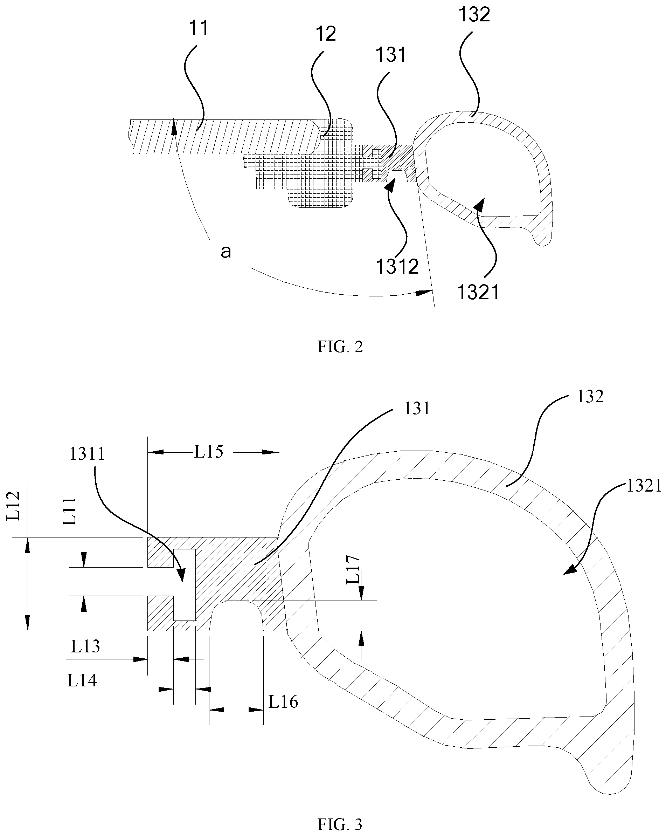

Specifically, as shown in FIGS. 2 to 5, in some embodiments, a part of the edge wrapping 12 is embedded in the first sealing portion 131. Further, a first T-shaped groove 1311 is formed in the first sealing portion 131 to provide a space for accommodating the embedded portion of the edge wrapping 12. The T-shaped groove has a narrow opening and a wide groove bottom, so that the relatively strong ability to withstand pulling force and prevent falling-off is provided between the edge wrapping 12 and the first sealing portion 131.

In some embodiments, a difference between an opening width L11 and a groove bottom width L10 (not marked in the figures) of the first T-shaped groove 1311 is 2 mm to 5 mm. For example, the difference between the opening width L11 and the groove bottom width L10 of the first T-shaped groove 1311 is 3 mm or 4 mm. It is further ensured that the edge wrapping 12 and the first sealing portion 131 can be reliably connected, and a relatively large pulling force is required to separate the edge wrapping 12 from the first sealing portion 131.

As shown in FIG. 3, in an embodiment, the opening width L11 of the first T-shaped groove 1311 is 2 mm to 5 mm. A thickness L12 of a portion of the first sealing portion 131, where the first T-shaped groove 1311 is formed, in a width direction of the opening of the first T-shaped groove 1311 is 4 mm to 10 mm. An opening depth L13 of the first T-shaped groove 1311 is 2 mm to 3 mm, and a groove bottom depth L14 of the first T-shaped groove 1311 is 2 mm to 3 mm.

By optimizing various dimensions of the first T-shaped groove 1311, such as the opening width L11, the groove bottom width L10, the opening depth L13, and the groove bottom depth L14, the edge wrapping 12 partially embedded in the first T-shaped groove 1311 does not easily come out.

It should be noted that an opening depth of a T-shaped groove in the present application refers to a depth of a space in such T-shaped groove whose width is consistent with the width of the opening, and a groove bottom depth of a T-shaped groove in the present application refers to a depth of a space in such T-shaped groove whose width is consistent with the groove bottom width.

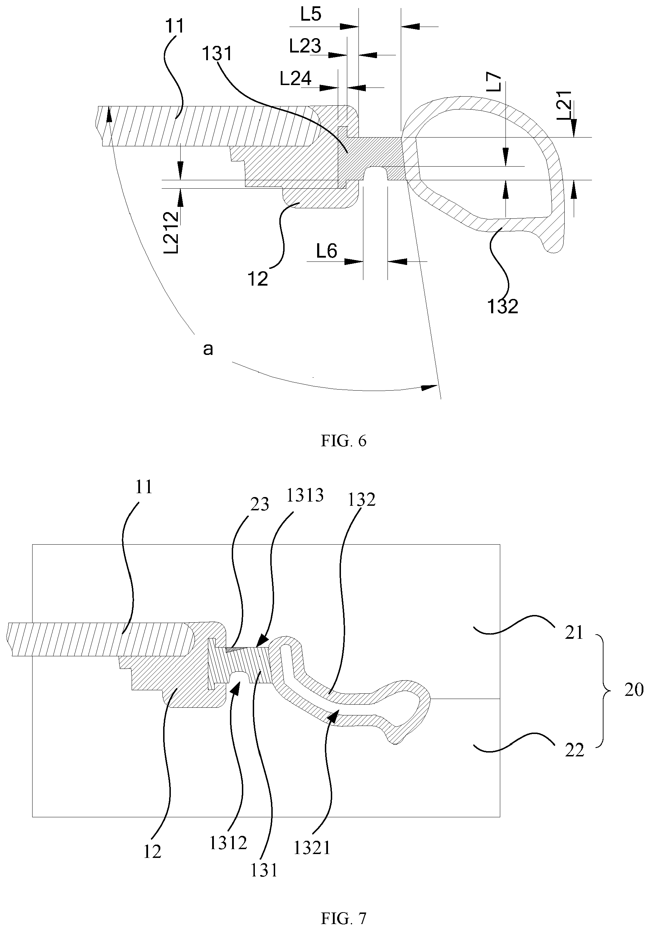

Further, in other embodiments, as shown in FIGS. 6 to 8, a part of the first sealing portion 131 is embedded in the edge wrapping 12, and a second T-shaped groove (not marked in the figures) is formed in the edge wrapping 12 to provide a space for accommodating an embedded portion of the first sealing portion 131.

Similarly, as shown in FIG. 6, a single side difference L212 between an opening width L21 and a groove bottom width L22 (not marked in the figures) of the second T-shaped groove is 0.5 mm to 3 mm. For example, the single side difference between the opening width L21 and the groove bottom width L22 of the second T-shaped groove is 1 mm or 2 mm.

Specifically, in an embodiment, as shown in FIG. 6, the opening width L21 of the second T-shaped groove is 4 mm to 12 mm, the opening width L21 of the second T-shaped groove is smaller than the groove bottom width L22 (not marked in the figures) of the second T-shaped groove by 1 mm to 6 mm, the opening depth L23 of the second T-shaped groove is 1 mm to 4 mm, and the groove bottom depth L24 of the second T-shaped groove is 1 mm to 3 mm.

Furthermore, in some embodiments, as shown in FIG. 6, the minimum distance L5 between the second sealing portion 132 and the edge wrapping 12 is 3 mm to 10 mm. In this way, the support capacity of the first sealing portion 131 can be ensured, and the first sealing portion 131 can be bent appropriately if necessary during assembly. After the glass edging assembly 10 is mounted in place, the first sealing portion 131 is elastically reset to a straightened state as shown in the figure, so as to improve the convenience of assembly.

Specifically, in an embodiment, as shown in FIGS. 2 and 3, the edge wrapping 12 is partially embedded in the first sealing portion 131. A depth L15 of the first sealing portion 131 is 6 mm to 12 mm in a direction in which the second sealing portion 132 is spaced from the glass 11.

As shown in FIGS. 1 to 10, in some embodiments, a surface of the first sealing portion 131 that is not in direct contact with the edge wrapping 12 and is not in direct contact with the second sealing portion 132 is provided with a positioning groove 1312.

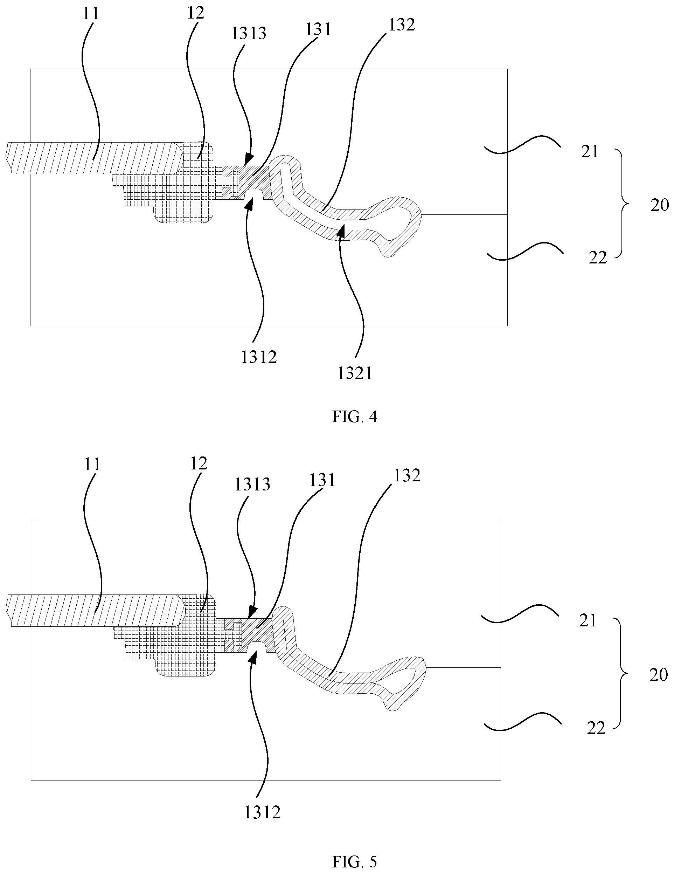

As shown in FIGS. 4, 5, 7, 8 and 10, the positioning groove 1312 can be used for positioning during injection molding of the edge wrapping 12. A general mold 20 is partially inserted into the positioning groove 1312 to limit the position of the sealing strip 13 in the general mold 20. On the other hand, after the positioning groove 1312 is formed, the first sealing portion 131 is easily bent and deformed when the first sealing portion 131 needs to be bent during assembly.

Specifically, in an embodiment, as shown in FIG. 6, a groove opening width L6 of the positioning groove 1312 is 1 mm to 5 mm, and a depth L7 of the positioning groove 1312 is 2 mm to 4 mm.

In another embodiment, as shown in FIG. 3, a groove opening width L16 of the positioning groove 1312 is 1 mm to 5 mm, and a depth L17 of the positioning groove 1312 is 2 mm to 4 mm.

In some embodiments, the first sealing portion 131 is made of polypropylene (PP) material, acrylonitrile butadiene styrene (ABS) material, thermoplastic elastomer (TPE) material, or polyvinyl chloride (PVC) material.

The second sealing portion 132 is made of TPE material, ethylene propylene diene monomer (EPDM) material or PVC material. The material of the second sealing portion 132 is soluble with the material of the first sealing portion 131.

The edge wrapping 12 is made of polyurethane (PU) material, PP material, PVC material, TPE material, or ABS material.

The first sealing portion 131 and the edge wrapping 12 are integrally connected by injection molding.

Furthermore, as shown in FIG. 1, in some embodiments, the second sealing portion 132 has a cavity 1321 formed therein. The cavity 1321 extends along a length direction of the sealing strip 13.

In another embodiment, a vehicle is provided that includes the glass edging assembly 10 in any of the embodiments of the present application.

According to the vehicle provided above, since it adopts the glass edging assembly 10 in any of the embodiments of the present application, the vehicle has high adaptability, good sealing performance, and reduces water leakage after long-term use.

In yet another embodiment, a manufacturing method of a glass edging assembly 10 is provided. The glass edging assembly 10 includes a sealing strip 13. A hardness of the first sealing portion 131 is greater than that of the second sealing portion 132. The second sealing portion 132 has a cavity 1321 formed therein. The cavity 1321 extends along a length direction of the sealing strip 13. Of course, the glass edging assembly 10 manufactured by the manufacturing method may be the glass edging assembly 10 described in any of the above embodiments.

The manufacturing method includes the following steps.

In step S1, as shown in FIGS. 4, 5, 7, 8 and 10, the glass 11 and the sealing strip 13 are put into the general mold 20, the general mold 20 is used to position the first sealing portion 131 and press the second sealing portion 132 in a direction close to the first sealing portion 131, so that the second sealing portion 132 is pressed and deformed and the cavity 1321 is compressed. The glass 11, the first sealing portion 131, and the general mold 20 together enclose an injection molding cavity.

In step S2, an edge wrapping material is injected into the injection molding cavity.

In step S3, after the edge wrapping material is shaped, the general mold 20 is removed, so that the second sealing portion 132 is elastically reset to restore the cavity 1321 to an initial state thereof.

According to the manufacturing method of the glass edging assembly 10 provided above, the manufactured glass edging assembly 10 includes an edge wrapping 12 and a sealing strip 13, which has a wider range of application and a good sealing performance, and reduces water leakage after long-term use. In addition, in the manufacturing process, the general mold 20 presses the second sealing portion 132 in the direction close to the first sealing portion 131, so that the second sealing portion 132 is pressed and deformed and the cavity 1321 is compressed, the sealing strip 13 has a strong force bearing capacity and the a high shape stability during injection molding, and the connection reliability between the injection molded edge wrapping 12 and the glass 11 and the connection reliability between the injection molded edge wrapping 12 and the sealing strip 13 are relatively high.

The second sealing portion 132 can elastically reset to restore the cavity 1321 to the initial state thereof after the edge wrapping material is shaped and released from the mold, as shown in FIGS. 1, 2, 6 and 9.

Further, in some embodiments, as shown in FIGS. 4, 5, 7, 8 and 10, the first sealing portion 131 has a first main surface 1313 extending along the length direction and in direct contact with the general mold 20. The general mold 20 is at least partially in an interference fit with the first main surface 1313. The general mold 20 can press the first sealing portion 131 tightly to fix the position of the first sealing portion 131, and the general mold 20 is closely fitted with the first sealing portion 131, so that the edge wrapping material can be prevented from flowing into a gap between the general mold 20 and the first sealing portion 131.

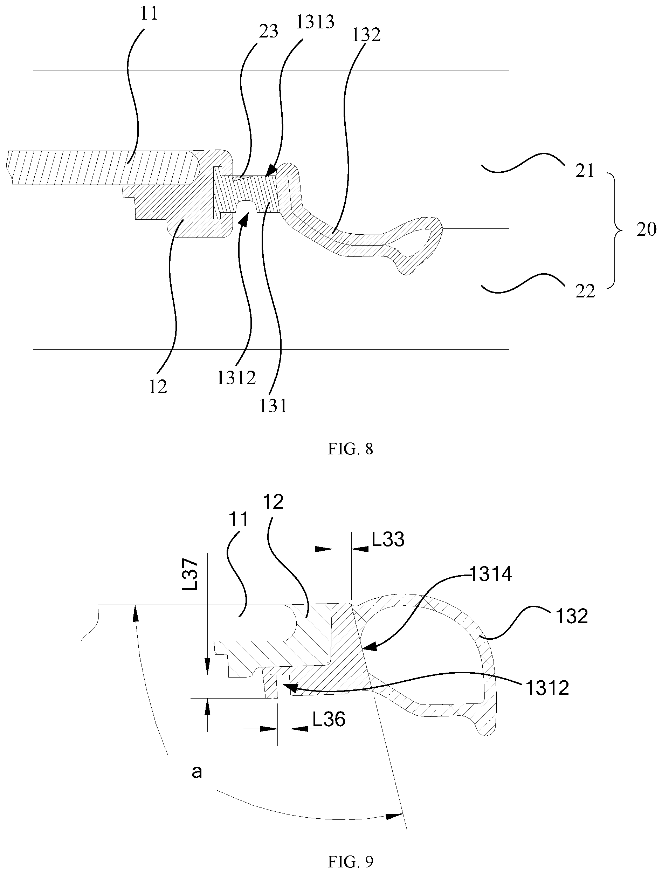

As shown in FIGS. 7 and 8, a triangular protrusion 23 is provided on a portion of the general mold 20 opposite to the first main surface 1313. After the sealing strip 13 is assembled into the general mold 20, the triangular protrusion 23 is in an interference fit with the first main surface 1313.

Specifically, in some embodiments, the amount of interference at the interference fit is 0.05 mm to 0.3 mm, which can prevent the edge wrapping material from flowing into a gap between the general mold 20 and the first sealing portion 131 without crushing and damaging the first sealing portion 131.

As shown in FIGS. 4, 5, 7, 8 and 10, during injection molding, the general mold 20 is in interference fit with the first sealing portion 131, so as to more reliably limit the position of the first sealing portion 131, and prevent the edge wrapping material from entering the gap between the first sealing portion 131 and the general mold 20. The surface of the first sealing portion 131 provided with the positioning groove 1312 faces away from the surface of the first sealing portion 131 in interference fit with the general mold 20. Moreover, in some embodiments, both surfaces are located between the second sealing portion 132 and the injection molding cavity for forming the edge wrapping 12. The general mold 20 is partially inserted into the positioning groove 1312 to support the first sealing portion 131 in the upward and left-right directions, so that the general mold 20 can be in an interference fit with the first sealing portion 131 and can apply a pressing force to the second sealing portion 132 to deform the second sealing portion 132 in the direction close to the first sealing portion 131.

Specifically, as shown in FIGS. 4, 5, 7, 8 and 10, the general mold 20 includes an upper mold 21 and a lower mold 22 capable of cooperating with each other. The lower mold 22 is located below the glass 11 and the sealing strip. The upper mold 21 is located above the glass 11 and the sealing strip 13. The lower mold 22 is partially inserted into the positioning groove 1312 to support the first sealing portion 131 in the upward and left-right directions. The upper mold 21 is in an interference fit with the first sealing portion 131 and applies a pressing force to the second sealing portion 132 to deform the second sealing portion 132 in the direction close to the first sealing portion 131.

Further, as shown in FIGS. 4, 5, 7, 8 and 10, in some embodiments, the pressing force applied to the second sealing portion 132 when the second sealing portion 132 is pressed by the general mold 20 can be decomposed into a first component perpendicular to a plane defined by the glass 11 and a second component parallel to the plane defined by the glass 11. The plane defined by the glass 11 refers to a plane parallel to a side surface of the glass 11 having the largest area when the glass 11 is in a shape of a flat plate.

In some embodiments, the greater an injection pressure that a cavity wall of the injection molding cavity needs to withstand when the material of the edge wrapping 12 is injected into the injection molding cavity, the greater a degree to which the second sealing portion 132 is pressed by the general mold 20 in the early stage.

As shown in FIGS. 4 and 7, in some embodiments, the injection pressure in the injection molding cavity is less than 5 MPa, or the minimum distance between the second sealing portion 132 and the injection molding cavity is not less than 5 mm. Although the second sealing portion 132 is pressed and deformed, the cavity 1321 is not completely compressed and disappeared, but forms an evacuation state, therefore the cavity walls of the cavity 1321 are not attached to each other. In this case, the material of the edge wrapping 12 may be PU material.

In other embodiments, as shown in FIGS. 5, 8 and 10, cavity walls of a part of the cavity 1321 are attached to and tightly press each other after the second sealing portion 132 is pressed and deformed in step S1, and
the step S2 includes the following step: injecting PP material, PVC material, TPE material or ABS material into the injection molding cavity, wherein the injection pressure in the injection molding cavity is more than 5 MPa.

Alternatively, cavity walls of a part of the cavity 1321 are attached to and tightly press each other after the second sealing portion 132 is pressed and deformed in step S1, and
the step S2 includes the following step: injecting a PU material, a PP material, a PVC material, a TPE material or an ABS material into the injection molding cavity, wherein the minimum distance between the second sealing portion 132 and the injection molding cavity is less than 5 mm.

In other words, when the injection pressure in the injection molding cavity is relatively large, for example, more than 5 MPa, or when the minimum distance between the second sealing portion 132 and the injection molding cavity is less than 5 mm, the second sealing portion 132 is pressed to an extent that the cavity walls of a part of the cavity 1321 are attached to and tightly press each other.

Further, as shown in FIGS. 2, 6 and 9, in some embodiments, a surface of the first sealing portion 131 that is in direct contact with the second sealing portion 132 is a second main surface 1314. An included angle *a* formed between the second main surface 1314 and the glass 11 is 98° to 130°.

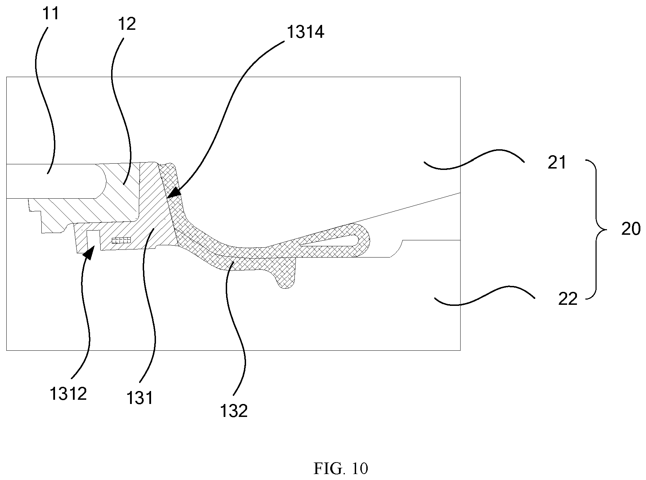

As shown in FIG. 10, the general mold 20 presses the second sealing portion 132 until cavity walls of a part of the cavity 1321 are attached to each other after. The pressing force applied by the general mold 20 is directly transmitted to the second main surface 1314 through the cavity walls attached to each other. Since the included angle *a* formed between the second main surface 1314 and the glass 11 is 98° to 130°, when the upper mold 21 and the lower mold 22 of the general mold 20 closed or demolded, the upper mold 21 is relatively easy to move in the up-down direction relative to the second sealing portion 132 at the angle shown in FIG. 10, which improves the convenience of mold closing and demolding. If the included angle *a* is 90°, the friction between the upper mold 21 and the second sealing portion 132 is relatively large, and the upper mold 21 does not easily press the second sealing portion 132. If the included angle *a* is too large, the component of the force exerted by the upper mold 21 through the second main surface 1314 in the horizontal direction is relatively small.

In the embodiment shown in FIG. 9, the minimum distance L33 between the second sealing portion 132 and the edge wrapping 12 is 2 mm to 5 mm.

As shown in FIG. 9, in this embodiment, the groove opening width L36 of the positioning groove 1312 is 1.5 mm to 4 mm, and the depth L37 of the positioning groove 1312 is 2 mm to 4 mm.

In the description of the present application, it is to be understood that the terms "length", "width", "thickness", "upper", "lower", "left", "right", "bottom", "inner", "outer", etc. indicate the orientations or positional relationships on the basis of the drawings. These terms are only intended for facilitating illustrating the present application and simplifying the illustration, rather than indicating or implying that the devices or elements referred thereto have to present particular orientations, and be constructed and operated in particular orientations, and therefore cannot be construed as limiting the present application.

In addition, the terms "first" and "second" are only intended for illustrative purposes, rather than being construed as indicating or implying relative importance or implicitly designating the number of the technical features as indicated. Thus, the features modified by "first" and "second" may explicitly or implicitly include at least one said feature.

In the present application, unless otherwise expressly specified and defined, the terms "mounted", "connected to", "coupled" and "fixed" should be understood in a broad sense, for example, fixedly connected or detachably connected, or integrated; mechanically connected or electrically connected; directly connected or indirectly connected through an intermediate medium, or in an interior communication or mutual interaction relationship between two elements, unless otherwise specifically defined. For those of ordinary skill in the art, the specific meanings of the above-described terms in the present application may be understood according to specific circumstances.

The technical features of the embodiments above may be combined arbitrarily. To make the description concise, not all possible combinations of the technical features in the above embodiments are described. However, as long as there are no contradictions in the combinations of these technical features, all of the combinations should be considered to be within the scope of the specification.

The embodiments above only represent several implementation modes of the present application, and the description thereof is relatively specific and detailed, but it should not be construed as limiting the scope of the patent. It should be noted that for those skilled in the art, various modifications and improvements may be made without departing from the concept of the present application, and all these modifications and improvements belong to the protection scope of the present application. Therefore, the scope of protection of the patent application should be subject to the appended claims.

## Claims

1. A glass edging assembly, comprising
a glass;
an edge wrapping disposed on an edge of the glass; and
a sealing strip comprising a first sealing portion and a second sealing portion, wherein a hardness of the first sealing portion is greater than a hardness of the second sealing portion, the first sealing portion is connected between the second sealing portion and the edge wrapping, and a part of one of the first sealing portion and the edge wrapping is embedded in another of the first sealing portion and the edge wrapping.

2. The glass edging assembly according to claim 1, wherein a part of the edge wrapping is embedded in the first sealing portion, and a first T-shaped groove is formed in the first sealing portion to provide a space for accommodating an embedded portion of the edge wrapping.

3. The glass edging assembly according to claim 2, wherein an opening width L11 of the first T-shaped groove is 2 mm to 5 mm, a thickness L12 of a portion of the first sealing portion, where the first T-shaped groove is formed, in a width direction of an opening of the first T-shaped groove is 4 mm to 10 mm, an opening depth L13 of the first T-shaped groove is 2 mm to 3 mm, and a groove bottom depth L14 of the first T-shaped groove is 2 mm to 3 mm.

4. The glass edging assembly according to claim 3, wherein a difference between the opening width L11 and the groove bottom width L10 of the first T-shaped groove is 2 mm to 5 mm.

5. The glass edging assembly according to claim 3, wherein a depth L15 of the first sealing portion is 6 mm to 12 mm in a direction in which the second sealing portion is spaced from the glass.

6. The glass edging assembly according to any one of claims 1 to 5, wherein a part of the first sealing portion is embedded in the edge wrapping, and a second T-shaped groove is formed in the edge wrapping to provide a space for accommodating an embedded portion of the first sealing portion.

7. The glass edging assembly according to claim 6, wherein an opening width L21 of the second T-shaped groove is 4 mm to 12 mm, the opening width L21 of the second T-shaped groove is smaller than a groove bottom width L22 of the second T-shaped groove by 1 mm to 6 mm, an opening depth L23 of the second T-shaped groove is 1 mm to 4 mm, and a groove bottom depth L24 of the second T-shaped groove is 1 mm to 3 mm.

8. The glass edging assembly according to claim 7, wherein a minimum distance L5 between the second sealing portion and the edge wrapping is 3 mm to 10 mm.

9. The glass edging assembly according to any one of claims 1 to 8, wherein a surface of the first sealing portion that is not in direct contact with the edge wrapping and is not in direct contact with the second sealing portion is provided with a positioning groove.

10. The glass edging assembly according to claim 9, wherein a groove opening width L6 of the positioning groove is 1 mm to 5 mm, and a depth L7 of the positioning groove is 2 mm to 4 mm.

11. The glass edging assembly according to any one of claims 1 to 10, wherein the sealing strip is a co-extrusion sealing strip; and/or
the first sealing portion and the edge wrapping integrally connected by injection molding.

12. The glass edging assembly according to any one of claims 1 to 11, wherein a surface of the first sealing portion that is in direct contact with the second sealing portion is a second main surface, and an included angle formed between the second main surface and the glass is 98° to 130°.

13. The glass edging assembly according to claim 1, wherein the first sealing portion is made of PP material, ABS material, TPE material or PVC material; and/or
the second sealing portion is made of TPE material, EPDM material or PVC material; and/or
the edge wrapping is made of PU material, PP material, PVC material, TPE material or ABS material.

14. A vehicle comprising the glass edging assembly according to any one of claims 1 to 13.

15. A manufacturing method of a glass edging assembly, wherein the glass edging assembly comprises a sealing strip, a hardness of the first sealing portion is greater than a hardness of the second sealing portion, the second sealing portion has a cavity formed therein, the cavity extends along a length direction of the sealing strip, and the manufacturing method comprises the following steps:
S1, putting a glass and the sealing strip into a general mold, positioning the first sealing portion and pressing the second sealing portion in a direction close to the first sealing portion by the general mold, so that the second sealing portion is pressed and deformed and the cavity is compressed, and the glass, the first sealing portion and the general mold together enclose an injection molding cavity;
S2, injecting an edge wrapping material into the injection molding cavity; and
S3, removing the general mold after the edge wrapping material is shaped, so that the second sealing portion is elastically reset to restore the cavity to an initial state thereof.

16. The manufacturing method of the glass edging assembly according to claim 15, wherein the first sealing portion has a first main surface extending along a length direction and in direct contact with the general mold, and the general mold is at least partially in an interference fit with the first main surface.

17. The manufacturing method of the glass edging assembly according to claim 16, wherein an amount of interference at the interference fit is 0.05 mm to 0.3 mm.

18. The manufacturing method of the glass edging assembly according to claim 16, wherein a triangular protrusion is provided on a portion of the general mold opposite to the first main surface, and after the sealing strip is assembled into the general mold, the triangular protrusion is in an interference fit with the first main surface.

19. The manufacturing method of the glass edging assembly according to any one of claims 15 to 18, wherein the greater an injection pressure that a cavity wall of the injection molding cavity needs to withstand when the edge wrapping material is injected into the injection molding cavity, the greater a degree to which the second sealing portion is pressed by the general mold in an early stage.

20. The manufacturing method of the glass edging assembly according to claim 19, wherein cavity walls of a part of the cavity are attached to and tightly press each other after the second sealing portion is pressed and deformed in the step S1; and
the step S2 comprises the following step: injecting PP material, PVC material, TPE material or ABS material into the injection molding cavity, wherein the injection pressure in the injection molding cavity is more than 5 MPa, or
the step S2 comprises the following step: injecting PU material, PP material, PVC material, TPE material or ABS material into the injection molding cavity, wherein a minimum distance between the second sealing portion and the injection molding cavity is less than 5 mm.
